# EUROPEAN PATENT SPECIFICATION

(11) **EP 3 205 066 B1**
(45) Date of publication and mention of the grant of the patent: **09.01.2019**
(21) Application number: 15779123.7
(22) Date of filing: 30.09.2015
(51) Int. Cl.: H04L 29/06, H04L 29/08

(54) **CLIENT-ASSISTED FULFILLMENT OF A RESOURCE REQUEST**
CLIENT-UNTERSTÜTZTE ERFÜLLUNG EINER RESSOURCENANFRAGE
SATISFACTION D'UNE DEMANDE DE RESSOURCES ASSISTÉE PAR UN CLIENT

(30) Priority: 08.10.2014 US 201414509675
(43) Date of publication of application: 16.08.2017
(73) Proprietor: Microsoft Technology Licensing, LLC, Redmond, WA 98052-6399 (US)
(72) Inventor: HOLMES, Lee, Redmond, Washington 98052-6399 (US); AMPALAM, Manoj K., Redmond, Washington 98052-6399 (US); SNOVER, Jeffrey P., Redmond, Washington 98052-6399 (US)
(74) Representative: Grünecker Patent- und Rechtsanwälte PartG mbB
(86) International application number: PCT/US2015/053061
(87) International publication number: WO 2016/057274

(56) References cited:
- US-A1- 2010 281 107
- US-A1- 2013 227 099
- US-A1- 2013 305 338

## Description

### BACKGROUND

When performing computer administration of multiple connected systems, a common concern is that one or more of the systems may be compromised. Authentication protocols have been developed in an effort to reduce a likelihood of a system being compromised. For example, such authentication protocols typically require proof of a user's identity in order for a system to be allowed to perform operations (e.g., access information) on behalf of the user. For instance, each user in a network may have credentials that include information specific to the user or to a group of users to which the user belongs. The user may provide the credentials in order to prove the identity of the user.

However, the limitations imposed by authentication protocols may cause substantial burdens in day-to-day network administration. For instance, if a remote system (i.e., a system located remotely from a client device) needs to access resources on behalf of the user, the authentication protocols typically prevent the access by default.

One proposed solution to address the aforementioned default action is to forego protecting the identity of the user. In accordance with this proposed solution, the remote system that requests access to the resources on behalf of the user is granted full access to the identity of the user, thereby increasing the risk for identity abuse. For instance, the remote system may use information of the user to interact with other machines to which the user has access. Some other proposed solutions, which have been met with limited success, are implemented in Microsoft Windows® as "Kerberos Constrained Delegation," whereby a target machine may be given unrestricted access to a subset of machines or networking protocols.

Patent specification US 2012/331528 A1 US relates to the field of distributed computing and in particular, to apparatus, systems, and methods to facilitate secure access to selected services during computations performed using hybrid public-private infrastructures.

Patent specification US 2013/227099 A1 relates to management of computing resources in a federated environment.

### SUMMARY

Various approaches are described herein for, among other things, providing client-assisted fulfillment of a resource request. For instance, the resource request initially may be directed to a machine that stores the resource (i.e., a resource machine). A resource access agent may redirect the resource request to a client device for purposes of fulfillment. For example, the resource access agent may intercept the resource request before the resource request reaches the resource machine and/or before the resource machine takes action with respect to the resource request. Once the client device provides data of the resource in response to receiving the resource request, the resource access agent may enable a machine that provided the request to access the data in fulfillment of the request.

Such client-assisted fulfillment may (or may not) be provided in a single sign-on environment. A single sign-on environment is an environment in which multiple distinct software systems are accessible to a user based on a single authentication of the user. Accordingly, a separate authentication of the user is not required in order for the user to access each of the distinct software systems in the single sign-on environment. Explicit credentials of the user may not be necessary for each action that is taken by the user. Rather, the credentials of the user may be implicitly provided based on a previous explicit instance of the credentials.

In a first example approach, a request for a resource to be accessed on behalf of a client device is received. The request is received from a first machine.. The client device is informed of an identity of the resource. Data of the resource is received from the client device in response to the client device receiving the data from a second machine that stores the resource. The data is provided to fulfill the request in response to receipt of the data from the client device.

In a second example approach, a request is received at a client device. The request identifies a resource to be accessed on behalf of the client device by a first machine. A query is provided from the client device to a second machine that stores the resource. The query requests access to the resource. Data of the resource is received at the client device from the second machine in response to the query. The data is provided from the client device to the first machine based on the request in response to receipt of the data at the client device.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

The invention is defined by the apended independent claims. Preferred embodiments are set out by the dependent claims.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example client-assisted request fulfillment system in accordance with an embodiment.
FIG. 2 is an example activity diagram in accordance with an embodiment.
FIGS. 3 and 5 depict flowcharts of example methods for providing client-assisted fulfillment of a resource request in accordance with embodiments.
FIG. 4 is a block diagram of an example resource access agent shown in FIG. 1 in accordance with an embodiment.
FIG. 6 is a block diagram of an example client device shown in FIG. 1 in accordance with an embodiment.
FIG. 7 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The following detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

### II. Example Embodiments

Example embodiments described herein are capable of providing client-assisted fulfillment of a resource request. For instance, the resource request initially may be directed to a machine that stores the resource (i.e., a resource machine). A resource access agent may redirect the resource request to a client device for purposes of fulfillment. For example, the resource access agent may intercept the resource request before the resource request reaches the resource machine and/or before the resource machine takes action with respect to the resource request. Upon receiving the resource request from the resource access agent, the client device fulfills the resource request. The resource access agent uses the fulfillment by the client device in lieu of seeking fulfillment of the request directly from the resource machine.

Such client-assisted fulfillment may be provided in a single sign-on environment, though the scope of the example embodiments is not limited in this respect. A single sign-on environment is an environment in which multiple distinct software systems are accessible to a user based on a single authentication of the user. Accordingly, a separate authentication of the user is not required in order for the user to access each of the distinct software systems in the single sign-on environment. Explicit credentials of the user may not be necessary for each action that is taken by the user. Rather, the credentials of the user may be implicitly provided based on a previous explicit instance of the credentials.

Example techniques described herein have a variety of benefits as compared to conventional techniques for fulfilling resource requests. For instance, the example techniques may be capable of fulfilling a request to access a resource on behalf of a user without providing credentials of the user to a machine that provides the request (i.e., the requesting machine).

The example techniques may be capable of validating the request against a client-side permission model in order to determine whether access to the resource is to be provided to the requesting machine. The example techniques may be capable of causing a client device to interact with the requesting machine for purposes of fulfilling the request in lieu of a machine that stores the resource interacting with the requesting machine. The example techniques may be capable of deploying a resource access agent on the requesting machine that is configured to redirect the request to the client device. The resource access agent may relay communications between the client device and the requesting machine to facilitate fulfillment of the request. The example techniques may substantially reduce an amount of time and resources (e.g., processor cycles) that are consumed to administer a multi-machine computing environment.

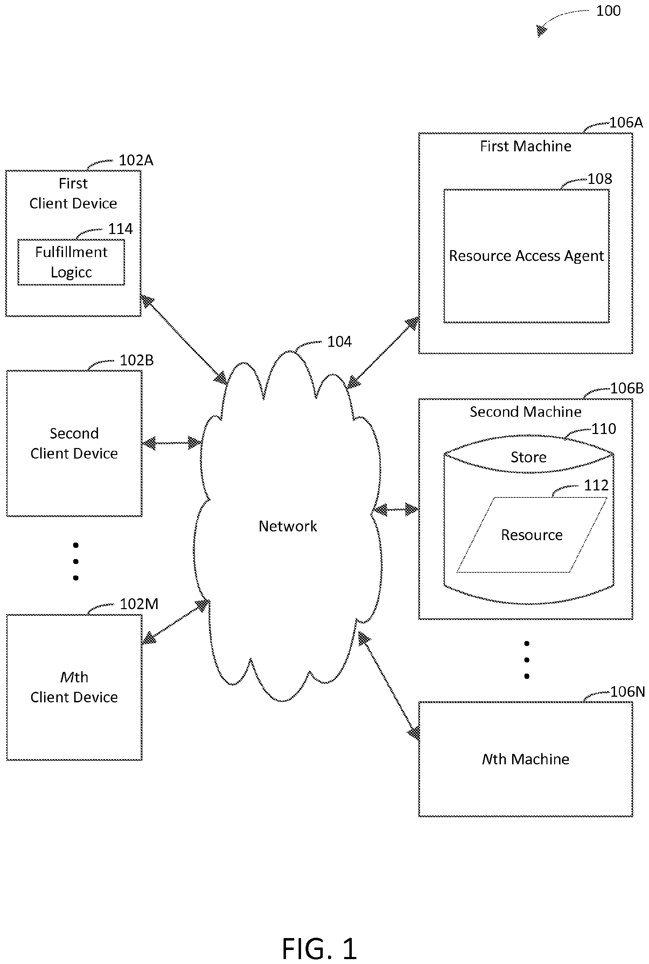

FIG. 1 is a block diagram of an example client-assisted request fulfillment system 100 in accordance with an embodiment. Generally speaking, client-assisted request fulfillment system 100 operates to provide information to users in response to requests (e.g., hypertext transfer protocol (HTTP) requests) that are received from the users. The information may include documents (e.g., Web pages, images, audio files, video files, etc.), output of executables, and/or any other suitable type of information. In accordance with example embodiments described herein, client-assisted request fulfillment system 100 providing client-assisted fulfillment of a resource request. Detail regarding techniques for providing client-assisted fulfillment of a resource request is provided in the following discussion.

As shown in FIG. 1, client-assisted request fulfillment system 100 includes a plurality of client devices 102A-102M, a network 104, and a plurality of machines 106A-106N. Communication among client devices 102A-102M and machines 106A-106N is carried out over network 104 using well-known network communication protocols. Network 104 may be a wide-area network (e.g., the Internet), a local area network (LAN), another type of network, or a combination thereof.

Client devices 102A-102M are processing systems that are capable of communicating with machines 106A-106N. An example of a processing system is a system that includes at least one processor that is capable of manipulating data in accordance with a set of instructions. For instance, a processing system may be a computer, a personal digital assistant, etc. Client devices 102A-102M are configured to provide requests to machines 106A-106N for requesting information stored on (or otherwise accessible via) machines 106A-106N. For instance, a user may initiate a request for executing a computer program (e.g., an application) using a client (e.g., a Web browser, Web crawler, or other type of client) deployed on a client device 102 that is owned by or otherwise accessible to the user. In accordance with some example embodiments, client devices 102A-102M are capable of accessing domains (e.g., Web sites) hosted by servers 104A-104N, so that client devices 102A-102M may access information that is available via the domains. Such domain may include Web pages, which may be provided as hypertext markup language (HTML) documents and objects (e.g., files) that are linked therein, for example.

Client devices 102A-102M may include any client-enabled system or device, including but not limited to a desktop computer, a laptop computer, a tablet computer, a personal digital assistant, a cellular telephone, a wearable device, or the like. It will be recognized that any one or more client devices 102A-102M may communicate with any one or more machines 106A-106N.

First client device 102A is shown to include fulfillment logic 114 for illustrative purposes. Fulfillment logic 114 is configured to process requests generated by first machine 106A that are redirected to first client device 102A for processing. For example, fulfillment logic 114 may assist with fulfillment of the requests. In an aspect of this example, fulfillment logic 114 may process a request for a resource (e.g., resource 112) that is initially directed to second machine 106B by first machine 106A but that is redirected to first client device 102A (e.g., by resource access agent 108). In accordance with this aspect, fulfillment logic 114 may retrieve the resource from second machine 106B and forward data of the resource for fulfillment of the request.

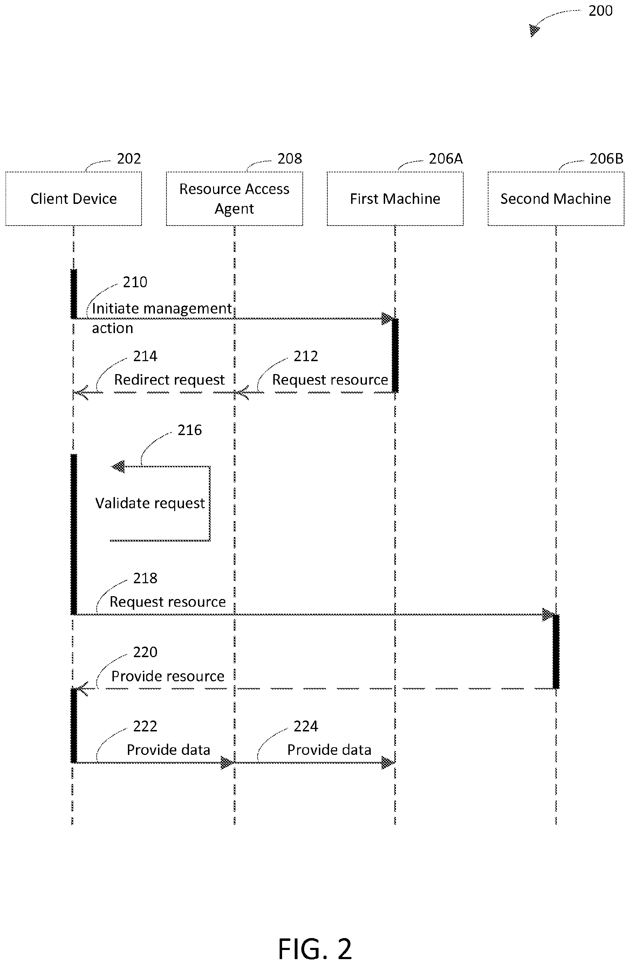

Example techniques for providing client-assisted fulfillment of a resource request from a perspective of a client device, such as client device 102A, are discussed in greater detail below with reference to FIGS. 2, 5, and 6.

Fulfillment logic 114 is shown to be incorporated in first client device 102A for illustrative purposes and is not intended to be limiting. For example, first client device 102A may be used by a user to manage one or more of machines 106A-106N. In accordance with this example, fulfillment logic 114 may facilitate management of the machine(s). It will be recognized that fulfillment logic 114 may be incorporated in any of the client devices 102A-102M.

Machines 106A-106N are processing systems that are capable of communicating with client devices 102A-102M. Machines 106A-106N are configured to execute computer programs that provide information to users in response to receiving requests from the users. For example, the information may include documents (e.g., Web pages, images, audio files, video files, etc.), output of executables, or any other suitable type of information. In accordance with some example embodiments, machines 106A-106N are configured to host respective Web sites, so that the Web sites are accessible to users of client-assisted request fulfillment system 100.

Any of machines 106A-106N may be managed by any of client devices 102A-102M. In the embodiment of FIG. 1, first machine 106A is shown to be managed by first client device 102A for illustrative purposes. For instance, first machine 106A may be configured as a build server, though the scope of the example embodiments is not limited in this respect. First machine 106A is also shown to include resource access agent 108 for illustrative purposes. Resource access agent 108 is configured to receive requests that are directed to first machine 106A. Resource access agent 108 is further configured to redirect selected requests that are generated by first machine 106A to destinations other than the destinations that are intended by first machine 106A. One example of a request that resource access agent 108 is configured to redirect is a request for a resource (e.g., resource 112) that is initially directed to second machine 106B by first machine 106A. Resource access agent 108 redirects the request to a client device (e.g., any of client devices 102A-102M) for processing. For example, resource access agent 108 may block the request from being sent to second machine 106B. In accordance with this example, resource access agent 108 may intercept the request. Accordingly, resource access agent 108 may enable first machine 106A to access the resource transparently by delegating a decision of whether first machine 106A is to be granted access to the resource to the client device.

Second machine 106B may be configured as a content server (e.g., a file share), though the scope of the example embodiments is not limited in this respect. For instance, second machine 106B is shown to include a store 110 for illustrative purposes. Store 110 is configured to store resources, such as resource 112. Store 110 is further configured to provide such resources in response to queries that request the resources. Examples of a resource include but are not limited to a file, web content, database content, output of an executable, or any other suitable type of information. Store 110 may be any suitable type of store. One type of store is a database. For instance, store 110 may be a relational database, an entity-relationship database, an object database, an object relational database, an extensible markup language (XML) database, etc. Store 110 is shown in FIG. 1 to be internal to second machine 106B for illustrative purses and is not intended to be limiting. It will be recognized that store 110 or a portion thereof may be external to second machine 106B. It will also be recognized that store 110 or a portion thereof may be distributed across two or more of machines 106B-106N.

Example techniques for providing client-assisted fulfillment of a resource request from a perspective of a machine, such as first machine 106A, are discussed in greater detail below with reference to FIGS. 2-4.

Resource access agent 108 is shown to be incorporated in first machine 106A for illustrative purposes and is not intended to be limiting. It will be recognized that at least a portion (e.g., all) of resource access agent 108 may be external to first machine 106A. For example, at least a portion of resource access agent 108 may be incorporated in any one or more of the client devices 102A-102M. In accordance with this example, client-side aspects of resource access agent 108 may be incorporated in one or more of the client devices 102A-102M, and server-side aspects of resource access agent 108 may be incorporated in first machine 106A.

Each of fulfillment logic 114 and resource access agent 108 may be implemented in various ways to provide client-assisted fulfillment of a resource request, including being implemented in hardware, software, firmware, or any combination thereof. For example, resource access agent 108 and/or resource access agent 108 may be implemented as computer program code configured to be executed in one or more processors. In another example, fulfillment logic 114 and/or resource access agent 108 may be implemented as hardware logic/electrical circuitry. For instance, each of fulfillment logic 114 and resource access agent 108 may be implemented in a respective field-programmable gate array (FPGA), a respective application-specific integrated circuit (ASIC), a respective application-specific standard product (ASSP), a respective system-on-a-chip system (SoC), a respective complex programmable logic device (CPLD), etc. Each SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

It will be recognized that any one or more of client devices 102A-102M and/or any one or more of machines 106A-106N may be implemented as a virtual machine, though the scope of the example embodiments is not limited in this respect.

FIG. 2 is an example activity diagram 200 in accordance with an embodiment. FIG. 2 depicts a client device 202, a resource access agent 208, a first machine 206A, and a second machine 206B. Client device 202 is an example of one of client devices 102A-102M, according to an embodiment. Resource access agent 208 is an example of resource access agent 108, according to an embodiment. First machine 206A is an example of first machine 106A, according to an embodiment. Second machine 206B is an example of second machine 106B, according to an embodiment. Activities 210, 212, 214, 216, 218, 220, 222, and 224 will now be described with reference to client device 202, resource access agent 208, first machine 206A, and second machine 206B.

In activity 210, client device 202 initiates a management action with regard to first machine 206A). In an example embodiment, resource access agent 208 receives an indication that the management action is initiated. In accordance with this embodiment, resource access agent 208 may notify the remote machine that the management action is initiated. For instance, resource access agent 208 may forward the indication to the remote machine.

In activity 212, resource access agent 208 intercepts a request for a resource that is intended for second machine 206B from first machine 206A. For instance, the request may be generated by first machine 206A in response to the management action being initiated. The indication that the management action is initiated may (or may not) specify that the resource is to be accessed by first machine 206A. If the indication does not specify that the resource is to be accessed by first machine 206A, first machine 206A may derive that the resource is to be accessed for completion of the management action based on knowledge of operations that are to be performed to complete the management action. Either way, first machine 206A attempts to send the request to second machine 206B in order to obtain access to the resource. Resource access agent 208 detects that first machine 206A has attempted to send the request to second machine 206B. Resource access agent 208 may prevent the request from reaching second machine 206B. First machine 206A may not have knowledge that the request is prevented from reaching second machine 206B. Accordingly, resource access agent 208 may prevent the request from reaching second machine 206B in a manner that is transparent to first machine 206A.

In activity 214, resource access agent 208 redirects the request that is intercepted from first machine 206A to client device 202 for processing. First machine 206A may not have knowledge that the request is redirected to client device 202. Accordingly, resource access agent 208 may redirect the request to client device 202 in a manner that is transparent to first machine 206A.

In activity 216, client device 202 validates the request. For instance, client device 202 may confirm that first machine 206A is allowed to have access to the resource.

In activity 218, client device 202 requests the resource from second machine 206B. For instance, client device 202 may request the resource from second machine 206B in response to confirming that first machine 206A is allowed to have access to the resource.

In activity 220, second machine 206B provides the resource to client device 202. For example, second machine 206B may provide the resource to client device 202 in response to an implicit authentication of client device 202. In accordance with this example, the implicit authentication may be based on a previous explicit authentication of client device 202. It may appear to second machine 206B that the resource is to be consumed by client device 202. Client device 202 need not necessarily inform second machine 206B that the resource is to be provided to resource access agent 208 and/or first device 206A.

In activity 222, client device 202 provides data of the resource to resource access agent 208.

In activity 224, resource access agent 208 provides (e.g., forwards) the data of the resource to first machine 206A to fulfill the request. First machine 206A may not have knowledge that the data of the resource is provided by client device 202 (in activity 222) and/or by resource access agent 208 (in activity 224). In fact, first machine 206A may be unaware that client device 202 assists with fulfillment of the request in any way and/or that resource access agent 208 intervenes to achieve fulfillment of the request in any way, though the scope of the example embodiments is not limited in this respect.

In some example embodiments, one or more activities 210, 212, 214, 216, 218, 220, 222, and/or 224 of activity diagram 200 may not be performed. Moreover, activities in addition to or in lieu of activities 210, 212, 214, 216, 218, 220, 222, and/or 224 may be performed.

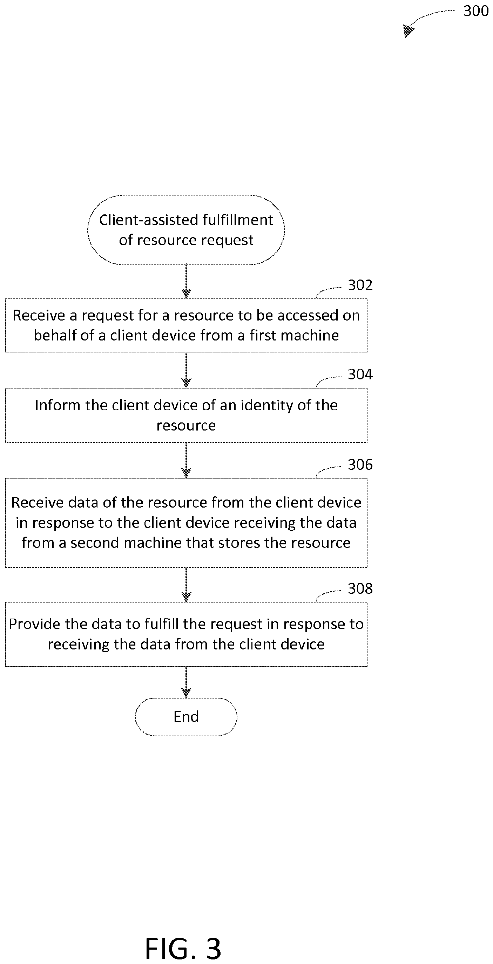

Further discussion of some example techniques for providing client-assisted fulfillment of a resource request is provided below with reference to FIGS. 3-6.

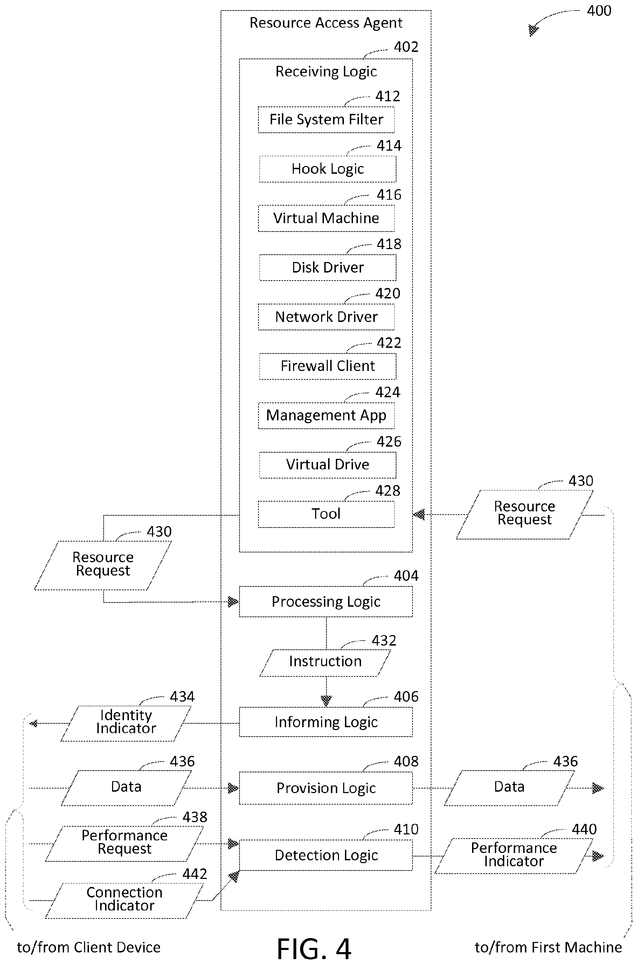

FIG. 3 depicts a flowchart 300 of an example method for providing client-assisted fulfillment of a resource request in accordance with an embodiment. Flowchart 300 may be performed by resource access agent 108 shown in FIG. 1, for example. For illustrative purposes, flowchart 300 is described with respect to a resource access agent 400 shown in FIG. 4. As shown in FIG. 4, resource access agent 400 includes receiving logic 402, processing logic 404, informing logic 406, provision logic 408, and detection logic 410. Receiving logic 402 includes a file system filter 412, hook logic 414, a virtual machine 416, a disk driver 418, a network driver 420, a firewall client 422, a management application 424, a virtual drive 426, and a tool 428. Further structural and operational embodiments will be apparent to persons skilled in the relevant art(s) based on the discussion regarding flowchart 300.

As shown in FIG. 3, the method of flowchart 300 begins at step 302. In step 302, a request for a resource to be accessed on behalf of a client device is received from a first machine. The request may identify the resource and/or the first machine and/or include other information, though the scope of the example embodiments is not limited in this respect. For instance, the request may indicate that the first machine initiated the request. The identification of the resource, the identification of the first machine, and/or the other information may enable the client device to determine whether the request is to be fulfilled. For instance, such information may enable the client device to determine whether the data of the resource is to be provided for fulfillment of the request. It will be recognized that the identification of the resource, the identification of the first machine, and/or the other information may be derived from a context of the request, though the scope of the example embodiments is not limited in this respect. Examples of a context include but are not limited to a communication channel via which the request is received, the client device being connected to the first machine, etc. The request may (or may not) be received in a single sign-on environment. The client device may (or may not) be communicatively coupled to the first machine via a network. The client device and the first machine may be same (e.g., a single machine) or different.

In an example implementation, receiving logic 402 receives a resource request 430 for a resource (e.g., resource 112) to be accessed on behalf of a client device (e.g., one of client devices 102A-102M) from the first machine (e.g., first machine 106A). The client device may (or may not) be communicatively coupled to the first machine via a network (e.g., network 104). Receiving logic 404 may provide the resource request 430 to processing logic 404 for processing.

At step 304, the client device is informed of an identity of the resource. In an example implementation, informing logic 406 informs the client device of the identity of the resource. For instance, processing logic 404 may provide an instruction 432 to informing logic 406 in response to (e.g., based on) receipt of the resource request 430 from receiving logic 402. The instruction 432 may indicate that the client device is to be notified of the identity of the resource. The instruction 432 may include an identifier that specifies the identity of the resource, though the scope of the example embodiments is not limited in this respect. Informing logic 406 may provide identity indicator 434 to the client device in response to receipt of the instruction 432 from processing logic 404. The identity indicator 434 may specify the identity of the resource. For example, the identity indicator 434 may include an identifier that is specific (e.g., unique) to the resource. For instance, the identifier may include a series or combination of characters (e.g., number(s), letter(s), etc.) that identify the resource. The identity indicator 434 may therefore distinguish the resource from other resources and/or enable the client device to distinguish the resource from other resources.

At step 306, data of the resource is received from the client device in response to the client device receiving the data from a second machine that stores the resource. The data may be received in response to the client device receiving the data directly from the second machine (e.g., without going through a proxy), though the scope of the example embodiments is not limited in this respect. In an example implementation, provision logic 406 receives data 436 from the client device in response to the client device receiving the data from the second machine (e.g., second machine 106B). For instance, provision logic 436 may monitor a designated (e.g., predetermined) port of the first machine to determine whether the data 436 is received at the designated port.

At step 308, the data is provided to fulfill the request in response to receiving the data from the client device. In an example implementation, provision logic 408 provides the data 436 to fulfill the resource request 430 in response to receiving the data 436 from the client device. For example, provision logic 408 may provide the data 436 without providing credentials of the client device (or a user thereof) to the first machine. In another example, provision logic 408 may provide the data 436 without modifying the data 436 prior to providing the data 436 to fulfill the resource request 430.

In an example embodiment, the data is received at step 306 further in response to validation of the request. In accordance with this embodiment, the data is provided at step 308 based on the validation. The validation may be based on any of a variety of criteria, including but not limited to a type of the request corresponding to (e.g., matching) a reference type; the request being received at a time instance that is included in a reference period of time; an identity of the first machine corresponding to a reference identity; an identity of a process running on the first machine from which the request is received corresponding to a reference identity; content of the request corresponding to reference content; the data of the resource corresponding to reference data or a type thereof (e.g., the data not including sensitive information); an identity of the second machine corresponding to a reference identity; a build command having been invoked, etc.

The steps of flowchart 300 may be implemented in any of a variety of contexts. A first example context involves the use of a file system filter. In an example embodiment of the first context, the request is directed to a file system. For instance, the resource may be one or more files that are included in the file system, the registry, etc. In accordance with this embodiment, receiving the request at step 302 includes intercepting the request using the file system filter. In further accordance with this embodiment, providing the data at step 308 includes providing the data by the file system filter to the first machine to fulfill the request.

A second example context involves an application programming interface (API) hook. In an example embodiment of the second context, receiving the request at step 302 includes intercepting the request using the API hook. An API hook intercepts function calls and/or messages and/or events passed between software components to alter and/or augment behavior of software, such as an operating system, an application, etc. The API hook may be supported by any suitable operating system (OS), including but not limited to Berkeley Software Distribution™ (BSD), developed and distributed by the Computer Systems Research Group (CSRG) of the University of California, Berkeley, or descendants thereof; Linux developed and distributed under the GNU Project; Mac OS® developed and distributed by Apple Inc., Microsoft Windows® developed and distributed by Microsoft Corporation; and UNIX™ developed and distributed by AT&T.

A third example context involves a virtual machine. In an example embodiment of the third context, receiving the request at step 302 includes receiving the request at the virtual machine. For instance, the virtual machine may be deployed on (e.g., execute on) the first machine. In further accordance with this embodiment, providing the data at step 308 includes providing the data by the virtual machine to the first machine to fulfill the request.

A fourth example context involves a disk driver. In an example embodiment of the fourth context, the request is directed to disk. For instance, the resource may be file(s), web content, database content, output of an executable, etc. stored on the disk. In accordance with this embodiment, receiving the request at step 302 includes intercepting the request using the disk driver. In further accordance with this embodiment, providing the data at step 308 includes providing the data by the disk driver to the first machine to fulfill the request.

A fifth example context involves a network driver. In an example embodiment of the fifth context, the request is directed to a network (e.g., network 104). For instance, the resource may be file(s), web content, database content, output of an executable, etc. stored on the network. In accordance with this embodiment, receiving the request at step 302 includes intercepting the request using the network driver. In further accordance with this embodiment, providing the data at step 308 includes providing the data by the network driver to the first machine to fulfill the request.

A sixth example context involves a firewall client. One example of a firewall client is Microsoft® Forefront® Threat Management Gateway (Forefront TMG). In an example embodiment of the sixth context, the request is directed to a network (e.g., network 104). For instance, the resource may be file(s), web content, database content, output of an executable, etc. stored on the network. In accordance with this embodiment, receiving the request at step 302 includes intercepting the request using the firewall client. In further accordance with this embodiment, providing the data at step 308 includes providing the data by the firewall client to the first machine to fulfill the request. For instance, the firewall client may employ the client-assisted resource request fulfillment techniques described herein without using a web proxy.

A seventh example context involves a management application. One example of a management application is Microsoft® PowerShell®. In an example embodiment of the seventh context, receiving the request at step 302 includes receiving the request at the management application. For instance, the management application may be deployed on (e.g., execute on) the first machine. In further accordance with this embodiment, providing the data at step 308 includes providing the data by the management application to the first machine to fulfill the request.

In some aspects of this embodiment, a command that is part of the management application or an operating system of the first machine may be created for purposes of redirecting requests (e.g., selected requests) that are provided by the first machine. In one aspect, the command may be part of the management application. In accordance with this aspect, the request may be received at step 302 in accordance with the command that is part of the management application. In another aspect, the command may be part of the operating system of the first machine. In accordance with this aspect, the request may be received at step 302 in accordance with the command that is part of the operating system of the first machine.

An eighth example context involves a virtual drive. In an example embodiment of the eighth context, receiving the request at step 302 includes receiving the request at the virtual drive. For instance, the virtual drive may be mounted on the first machine. In further accordance with this embodiment, providing the data at step 308 includes providing the data by the virtual drive to the first machine to fulfill the request.

A ninth example context involves the use of a virtual file system. In an example embodiment of the ninth context, the request is directed to the virtual file system. For instance, the resource may be one or more files that are included in the virtual file system. In accordance with this embodiment, receiving the request at step 302 includes intercepting the request using a tool that is configured to interact with the virtual file system. In further accordance with this embodiment, providing the data at step 308 includes providing the data by the tool to the first machine to fulfill the request.

In some example embodiments, one or more steps 302, 304, 306, and/or 308 of flowchart 300 may not be performed. Moreover, steps in addition to or in lieu of steps 302, 304, 306, and/or 308 may be performed. For instance, in an example embodiment, the method of flowchart 300 includes determining that performance of a management action is initiated with respect to the first machine. Examples of a management action include but are not limited to accessing a file, a management application, disk, network, virtual disk, virtual file system, etc.; starting a build of a software program; accessing web page(s); monitoring and/or controlling functionality of the first machine and/or user(s) who are associated with the first machine, etc. In one example, detection logic 410 may determine that performance of the management action is initiated. In accordance with this example, detection logic 410 may determine that performance of the management action is initiated based on receipt of performance request 438. For instance, the performance request 438 may include an instruction to perform the management action.

In accordance with this embodiment, the request is received at step 302 based on initiation of the performance of the management action. For instance, the initiation of the performance of the management action may trigger provision of the request by the first machine and/or subsequent receipt of the request (e.g., by receiving logic 402). For example, detection logic 410 may generate a performance indicator 440 based on the performance request 438. Performance indicator 440 may indicate that performance of the management action is to be initiated. In an aspect of this example, the performance indicator 440 may be the same as the performance request 438 (i.e., unchanged from the performance request 438). In another aspect of this example, detection logic 410 may modify the performance request 438 to generate the performance indicator 440. It will be recognized that management actions need not necessarily correspond 1-to-1 with resource requests. Accordingly, the request that is received at step 302 may correspond to a plurality of management actions.

In one aspect of this embodiment, determining that the performance of the management action is initiated includes receiving a performance request from the client device. For instance, detection logic 410 may receive the performance request 438 from the client device. In accordance with this aspect, the performance request is configured to initiate the management action. In one example of this aspect, the performance request specifies that the resource is to be accessed. In another example of this aspect, the performance request does not specify that the resource is to be accessed. In accordance with this example, the request is received at step 302 in response to the first machine deriving that the resource is to be accessed for the performance of the management action. For instance, the first machine may determine one or more operations that are to be performed in order to achieve the management action. The first machine may determine that the one or more operations include (e.g., require) accessing the resource.

In another example embodiment, the method of flowchart 300 includes determining that a connection of the client device to a network that is configured to communicatively couple the client device to the first machine is initiated. In accordance with this embodiment, the client device is informed of the identity of the resource at step 304 based on initiation of the connection of the client device to the network. For instance, the initiation of the connection may trigger informing the client of the identity of the resource. In an aspect of this embodiment, informing the client at step 304 includes delaying the informing of the client device of the identity of the resource until the initiation of the connection of the client device to the network.

In an example implementation, detection logic 410 determines that the connection of the client device to the network is initiated. For example, determination logic 410 may determine that the connection is initiated based on receipt of connection indicator 442. Connection indicator 442 may specify that the connection of the client device to the network is initiated. In accordance with this example, detection logic 410 may provide an instruction to informing logic 406 based on receipt of the connection indicator 442. For instance, the instruction may indicate that the identity indicator 434 is to be provided to the client device. In one aspect, the instruction indicates that delaying the informing of the client device of the identity of the resource is to be ceased.

It will be recognized that resource access agent 400 may not include one or more of receiving logic 402, processing logic 404, informing logic 406, provision logic 408, detection logic 410, file system filter 412, hook logic 414, virtual machine 416, disk driver 418, network driver 420, firewall client 422, management application 424, virtual drive 426, and/or tool 428. Furthermore, resource access agent 400 may include components in addition to or in lieu of receiving logic 402, processing logic 404, informing logic 406, provision logic 408, detection logic 410, file system filter 412, hook logic 414, virtual machine 416, disk driver 418, network driver 420, firewall client 422, management application 424, virtual drive 426, and/or tool 428.

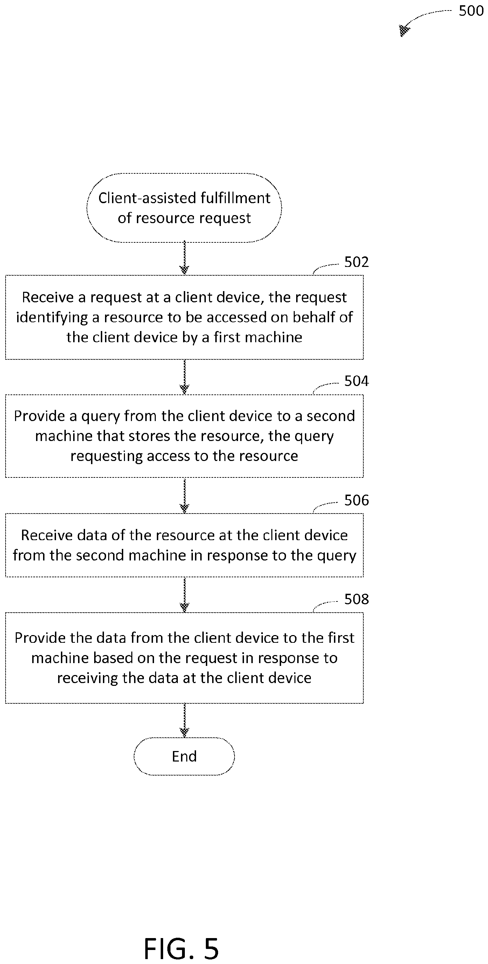

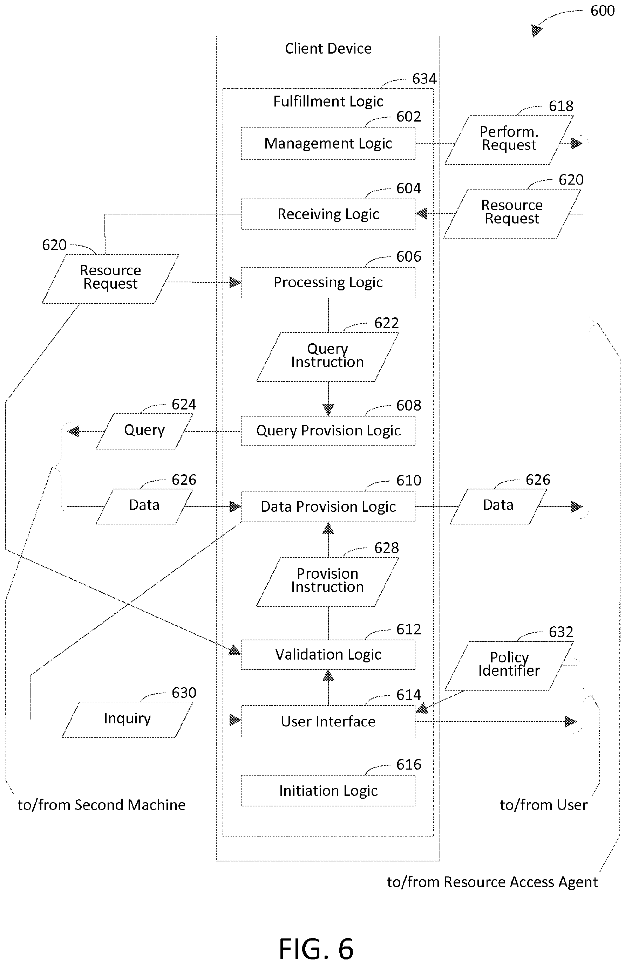

FIG. 5 depicts a flowchart 500 of another example method for providing client-assisted fulfillment of a resource request in accordance with an embodiment. Flowchart 500 may be performed by any of client devices 102A-102M shown in FIG. 1, for example. For illustrative purposes, flowchart 500 is described with respect to a client device 600 shown in FIG. 6. As shown in FIG. 6, client device 600 includes fulfillment logic 634. Fulfillment logic 634 includes management logic 602, receiving logic 604, processing logic 606, query provision logic 608, data provision logic 610, validation logic 612, user interface 614, and initiation logic 616. Further structural and operational embodiments will be apparent to persons skilled in the relevant art(s) based on the discussion regarding flowchart 300.

As shown in FIG. 5, the method of flowchart 500 begins at step 502. In step 502, a request is received at a client device. The request identifies a resource to be accessed on behalf of the client device by a first machine. The request may identify the first machine and/or include other information, though the scope of the example embodiments is not limited in this respect. For instance, the request may identify the first machine as an initiator of the request. An identification of the resource, an identification of the first machine, and/or other information that may be included in the request may enable the client device to determine whether the request is to be fulfilled. For instance, such information may enable the client device to determine whether the data of the resource is to be provided for fulfillment of the request. The request may be received in a single sign-on environment, though the scope of the example embodiments is not limited in this respect. The client device may (or may not) be communicatively coupled to the first machine via a network. The client device and the first machine may be same (e.g., a single machine) or different.

In an example implementation, receiving logic 604 receives resource request 620. In accordance with this implementation, the resource request 620 identifies the resource (e.g., resource 112) to be accessed on behalf of client device 600 by the first machine (e.g., first machine 106A), which may be communicatively coupled to client device 600 via a network (e.g., network 104). Receiving logic 604 may provide the resource request 620 to processing logic 606 and/or validation logic 612 for processing.

At step 504, a query is provided from the client device to a second machine that stores the resource. The query requests access to the resource. For instance, the query may indicate that access to the resource is to be for the client device. In one aspect, the query may identify the first machine as an initiator of the request. In another aspect, the query may not identify the first machine as an initiator of the request. In an example implementation, query provision logic 608 provides query 624 to the second machine (e.g., second machine 106B). For example, processing logic 606 may provide a query instruction 622 to query provision logic 608. In accordance with this example, processing logic 606 may provide the query instruction 622 based on receipt of the resource request 620 from receiving logic 604. Query provision logic 608 may provide the query 624 based on receipt of the query instruction 622. For instance, receipt of the query instruction 622 at query provision logic 608 may trigger query provision logic 608 to provide the query 624. The query 624 requests access to the resource.

At step 506, data of the resource is received at the client device from the second machine in response to the query. The data may be received directly from the second machine (e.g., without going through a proxy), though the scope of the example embodiments is not limited in this respect. For instance, the data of the resource may be received without a need to change a permission regarding the second machine and/or the resource. In an example implementation, data provision logic 610 receives data 626 of the resource from the second machine in response to the query 624.

At step 508, the data is provided from the client device to the first machine based on the request in response to receiving the data at the client device. It will be recognized that the data need not necessarily be provided directly to the first machine. For instance, the data may be provided to the first machine via a resource access agent (e.g., resource access agent 108). In an example implementation, data provision logic 610 provides the data 626 to the first machine based on the resource request 620 in response to data provision logic 610 receiving the data 626. In an aspect of this implementation, data provision logic 610 may provide the data 626 without modifying the data 626 prior to providing the data 626 to the first machine. In another aspect of this implementation, data provision logic 610 may modify the data 626 before providing the data 626 to the first machine. For example, data provision logic 608 may add information to the data 626, replace at least some of the data with other data, and/or remove selected portion(s) of the data 626 before providing the data 626 to the first machine.

In some example embodiments, one or more steps 502, 504, 506, and/or 508 of flowchart 500 may not be performed. Moreover, steps in addition to or in lieu of steps 502, 504, 506, and/or 508 may be performed. For instance, in an example embodiment, the method of flowchart 500 includes validating the request. For instance, validation logic 612 may validate the resource request 620. In accordance with this embodiment, the data is provided to the first machine at step 508 based on validation of the request in response to receiving the data at the client device. For instance, validation logic 612 may provide a provision instruction 628 to data provision logic 610 in response to the resource request 620 being validated. The provision instruction 628 may instruct data provision logic 610 to provide the data 626 to the first machine. For example, data provision logic 610 may be configured to not provide the data 626 to the first machine unless the provision instruction 628 is received from validation logic 612. Accordingly, the provision instruction 628 may trigger provision of the data 626 to the first machine by data provision logic 610.

In accordance with this embodiment, validation of the request may be performed based on whether attribute(s) associated with the request, the first machine, the second machine, and/or the resource match reference (e.g., predetermined) attribute(s). Some example attributes and criteria on which validation may be based are described above with reference to flowchart 300 of FIG. 3.

In an aspect of this embodiment, the request that is received at step 502 further identifies the first machine. In accordance with this aspect, validating the request includes reviewing an access policy (e.g., a security limitation) that is associated with the first machine to determine whether the access policy indicates that the first machine is not to receive access to the resource. For instance, validation logic 612 may review the access policy.

In a first example of this aspect, the access policy may identify selected resources that the first machine is not allowed to access. In second example of this aspect, the access policy may identify selected resources that the first machine is allowed to access. In accordance with either of these examples, the selected resources may be reviewed to determine whether the requested resource is included among the selected resources.

In further accordance with this aspect, the data is provided to the first machine at step 508 further based on the access policy not indicating that the first machine is not to receive access to the resource. For instance, in the first example of this aspect mentioned above, the data may be provided to the fist machine based on the requested resource not being included among the selected resources. In the second example of this aspect, the data may be provided to the first machine based on the requested resource being included among the selected resources.

In further accordance with this aspect, the method of flowchart 500 may include providing an inquiry via a user interface of the client device based on receipt of the request. The inquiry solicits identification of at least one access policy to be applied with respect to the request. The inquiry may identify the first machine and/or the resource, though the example embodiments are not limited in this respect. In one example, data provision logic 610 may provide inquiry 630 via user interface 614 based on receipt of the resource request 620. The inquiry 630 solicits identification of at least one access policy to be applied with respect to the resource request 620. In further accordance with this aspect, the method of flowchart 500 may further include receiving identification of the access policy that is associated with the first machine via the user interface in response to the inquiry. Accordingly, the access policy may be specified by a user of the client device in response to the inquiry, which may be initiated by receipt of the request. In one example, the access policy may indicate conditions that are to be satisfied in order for the first machine to be granted access to the resource. In another example, the access policy may indicate that the first machine is not to be granted access to the resource (e.g., under any conditions).

It will be recognized that at least one access policy to be applied may be determined without use of a user interface. For instance, a configuration store may store one or more pre-installed access policies. Any of the one or more access policies may be retrieved from the configuration store to determine the at least one access policy to be applied.

In an example implementation, validation logic 612 may receive policy identifier 632 via user interface 614 in response to the inquiry 630. The policy identifier 632 specifies the access policy that is associated with the first machine. In further accordance with this aspect, the access policy may be reviewed in response to receiving the identification of the access policy. For instance, validation logic 612 may review the policy identifier 632 in response to receiving the policy identifier 632 via user interface 614.

It will be recognized that user interface 614 may be any suitable interface. For instance, user interface 614 may include one or more input devices, such as a touch screen, a microphone, a camera, a physical keyboard, and/or a trackball. User interface 614 may include one or more output devices, such as a speaker, a display, a piezoelectric device, and/or other haptic output device. It will be recognized that physical contact with a surface of a touch screen is not necessary for input to be detected by some touch screens. For example, the touch screen can support a finger hover detection using capacitive sensing, as is well understood in the art. Other detection techniques can be used, such as camera-based detection and ultrasonic-based detection.

It will be further recognized that some devices can serve more than one input/output function. For example, a touch screen and a display can be combined in a single input/output device. The input devices can include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods).

In another example embodiment, the method of flowchart 500 includes initiating performance of a management action with respect to the first machine by the client device. For instance, management logic 602 may initiate the performance of the management action with respect to the first machine. For instance, management logic 602 may provide performance request 618, which includes an instruction to initiate the performance of the management action. Some examples of a management action are described above with reference to flowchart 300 of FIG. 3. In accordance with this embodiment, the request is received at step 502 based on initiation of the performance of the management action. For instance, receiving logic 604 may receive the resource request 620 in response to management logic 602 providing the performance request 618.

In yet another example embodiment, the method of flowchart 500 includes initiating a connection by the client device to a network that is configured to communicatively couple the client device to the first machine. For instance, initiation logic 616 may initiate the connection to the network (e.g., network 104). In accordance with this embodiment, the request is received at step 502 based on initiation of the connection by the client device. For instance, receiving logic 604 may receive the resource request 620 based on initiation of the connection by initiation logic 616. In an aspect of this embodiment, the initiation of the connection may trigger the resource request 620.

It will be recognized that client device 600 may not include one or more of fulfillment logic 634, management logic 602, receiving logic 604, processing logic 606, query provision logic 608, data provision logic 610, validation logic 612, user interface 614, and/or initiation logic 616. Furthermore, client device 600 may include components in addition to or in lieu of fulfillment logic 634, management logic 602, receiving logic 604, processing logic 606, query provision logic 608, data provision logic 610, validation logic 612, user interface 614, and/or initiation logic 616.

Any one or more of client devices 102A-102M, any one or more of machines 106A-106N, fulfillment logic 114, resource access agent 108, receiving logic 402, processing logic 404, informing logic 406, provision logic 408, detection logic 410, file system filter 412, hook logic 414, virtual machine 416, disk driver 418, network driver 420, firewall client 422, management application 424, virtual drive 426, tool 428, fulfillment logic 634, management logic 602, receiving logic 604, processing logic 606, query provision logic 608, data provision logic 610, validation logic 612, user interface 614, initiation logic 616, flowchart 300, and/or flowchart 500 may be implemented in hardware, software, firmware, or any combination thereof.

For example, any one or more of client devices 102A-102M, any one or more of machines 106A-106N, fulfillment logic 114, resource access agent 108, receiving logic 402, processing logic 404, informing logic 406, provision logic 408, detection logic 410, file system filter 412, hook logic 414, virtual machine 416, disk driver 418, network driver 420, firewall client 422, management application 424, virtual drive 426, tool 428, fulfillment logic 634, management logic 602, receiving logic 604, processing logic 606, query provision logic 608, data provision logic 610, validation logic 612, user interface 614, initiation logic 616, flowchart 300, and/or flowchart 500 may be implemented, at least in part, as computer program code configured to be executed in one or more processors.

In another example, any one or more of client devices 102A-102M, any one or more of machines 106A-106N, fulfillment logic 114, resource access agent 108, receiving logic 402, processing logic 404, informing logic 406, provision logic 408, detection logic 410, file system filter 412, hook logic 414, virtual machine 416, disk driver 418, network driver 420, firewall client 422, management application 424, virtual drive 426, tool 428, fulfillment logic 634, management logic 602, receiving logic 604, processing logic 606, query provision logic 608, data provision logic 610, validation logic 612, user interface 614, initiation logic 616, flowchart 300, and/or flowchart 500 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### III. Further Discussion of Some Example Embodiments

In a first example method, a request for a resource to be accessed on behalf of a client device is received. The request is received from a first machine (e.g., in a single sign-on environment). The client device may be communicatively coupled to the first machine via a network. The client device and the first machine may be same or different. The client device is informed of an identity of the resource. Data of the resource is received from the client device in response to the client device receiving the data from a second machine that stores the resource. The data is provided to fulfill the request in response to receiving the data from the client device.

In a first aspect of the first example method, receiving the data comprises receiving the data from the client device further in response to validation of the request. In accordance with the first aspect, providing the data comprises providing the data to fulfill the request based on the validation.

In a second aspect of the first example method, receiving the request comprises receiving the request that further identifies the first machine. The second aspect of the first example method may be implemented in combination with the first aspect of the first example method, though the example embodiments are not limited in this respect.

In a third aspect of the first example method, the first method further comprises determining that performance of a management action is initiated with respect to the first machine. In accordance with the third aspect, receiving the request comprises receiving the request based on initiation of the performance of the management action. For example, determining that the performance of the management action is initiated may comprise receiving a performance request from the client device. In accordance with this example, the performance request may be configured to initiate the management action. In further accordance with this example, the performance request may specify that the resource is to be accessed. In another example, determining that the performance of the management action is initiated may comprise receiving a performance request from the client device. In accordance with this example, the performance request may be configured to initiate the management action. In further accordance with this example, the performance request may not specify that the resource is to be accessed. In further accordance with this example, receiving the request from the first machine may comprise receiving the request from the first machine in response to a determination by the first machine that the resource is to be accessed for the performance of the management action. The third aspect of the first example method may be implemented in combination with the first and/or second aspect of the first example method, though the example embodiments are not limited in this respect.

In a fourth aspect of the first example method, the first example method further comprises determining that a connection of the client device to the network is initiated. In accordance with the fourth aspect, informing the client device of the identity of the resource comprises delaying the informing of the client device of the identity of the resource until initiation of the connection of the client device to the network. The fourth aspect of the first example method may be implemented in combination with the first, second, and/or third aspect of the first example method, though the example embodiments are not limited in this respect.

In a fifth aspect of the first example method, receiving the request comprises intercepting the request that is directed to a file system using a file system filter. In accordance with the fifth aspect, providing the data to fulfill the request comprises providing the data by the file system filter to the first machine to fulfill the request. The fifth aspect of the first example method may be implemented in combination with the first, second, third, and/or fourth aspect of the first example method, though the example embodiments are not limited in this respect.

In a sixth aspect of the first example method, receiving the request comprises intercepting the request using an application programming interface hook. The sixth aspect of the first example method may be implemented in combination with the first, second, third, fourth, and/or fifth aspect of the first example method, though the example embodiments are not limited in this respect.

In a seventh aspect of the first example method, receiving the request comprises receiving the request at a virtual machine that is deployed on the first machine. In accordance with the seventh aspect, providing the data to fulfill the request comprises providing the data by the virtual machine to the first machine to fulfill the request. The seventh aspect of the first example method may be implemented in combination with the first, second, third, fourth, fifth, and/or sixth aspect of the first example method, though the example embodiments are not limited in this respect.

In an eighth aspect of the first example method, receiving the request comprises intercepting the request that is directed to disk using a disk driver. In accordance with the eighth aspect, providing the data to fulfill the request comprises providing the data by the disk driver to the first machine to fulfill the request. The eighth aspect of the first example method may be implemented in combination with the first, second, third, fourth, fifth, sixth, and/or seventh aspect of the first example method, though the example embodiments are not limited in this respect.

In a ninth aspect of the first example method, receiving the request comprises intercepting the request that is directed to the network using a network driver. In accordance with the ninth aspect, providing the data to fulfill the request comprises providing the data by the network driver to the first machine to fulfill the request. The ninth aspect of the first example method may be implemented in combination with the first, second, third, fourth, fifth, sixth, seventh, and/or eighth aspect of the first example method, though the example embodiments are not limited in this respect.

In a tenth aspect of the first example method, receiving the request comprises intercepting the request that is directed to the network using a firewall client. In accordance with the tenth aspect, providing the data to fulfill the request comprises providing the data by the firewall client to the first machine to fulfill the request. The tenth aspect of the first example method may be implemented in combination with the first, second, third, fourth, fifth, sixth, seventh, eighth, and/or ninth aspect of the first example method, though the example embodiments are not limited in this respect.

In an eleventh aspect of the first example method, receiving the request comprises receiving the request at a management application that is deployed on the first machine. In accordance with the eleventh aspect, providing the data to fulfill the request comprises providing the data by the management application to the first machine to fulfill the request. The eleventh aspect of the first example method may be implemented in combination with the first, second, third, fourth, fifth, sixth, seventh, eighth, ninth, and/or tenth aspect of the first example method, though the example embodiments are not limited in this respect.

In a twelfth aspect of the first example method, receiving the request comprises receiving the request at the management application in accordance with a command that is part of the management application. The twelfth aspect of the first example method may be implemented in combination with the first, second, third, fourth, fifth, sixth, seventh, eighth, ninth, tenth, and/or eleventh aspect of the first example method, though the example embodiments are not limited in this respect.

In a thirteenth aspect of the first example method, receiving the request comprises receiving the request at the management application in accordance with a command that is part of an operating system of the first machine. The thirteenth aspect of the first example method may be implemented in combination with the first, second, third, fourth, fifth, sixth, seventh, eighth, ninth, tenth, eleventh, and/or twelfth aspect of the first example method, though the example embodiments are not limited in this respect.

In a fourteenth aspect of the first example method, receiving the request comprises receiving the request at a virtual drive that is mounted on the first machine. In accordance with the fourteenth aspect, providing the data to fulfill the request comprises providing the data by the virtual drive to the first machine to fulfill the request. The fourteenth aspect of the first example method may be implemented in combination with the first, second, third, fourth, fifth, sixth, seventh, eighth, ninth, tenth, eleventh, twelfth, and/or thirteenth aspect of the first example method, though the example embodiments are not limited in this respect.

In a fifteenth aspect of the first example method, receiving the request comprises intercepting the request that is directed to a virtual file system using a tool that is configured to interact with the virtual file system. In accordance with the fifteenth aspect, providing the data to fulfill the request comprises providing the data by the tool to the first machine to fulfill the request. The fifteenth aspect of the first example method may be implemented in combination with the first, second, third, fourth, fifth, sixth, seventh, eighth, ninth, tenth, eleventh, twelfth, thirteenth, and/or fourteenth aspect of the first example method, though the example embodiments are not limited in this respect.

In a second example method, a request is received at a client device (e.g., in a single sign-on environment). The request identifies a resource to be accessed on behalf of the client device by a first machine (e.g., that is communicatively coupled to the client device via a network). A query is provided from the client device to a second machine that stores the resource. The query requests access to the resource. Data of the resource is received at the client device from the second machine in response to the query. The data is provided from the client device to the first machine based on the request in response to receiving the data at the client device.

In a first aspect of the second example method, receiving the request comprises receiving the request that further identifies the first machine.

In a second aspect of the second example method, the second example method further comprises validating the request. In accordance with the second aspect, providing the data comprises providing the data from the client device to the first machine based on validation of the request in response to receiving the data at the client device. In further accordance with the second aspect, receiving the request may comprise receiving the request that further identifies the first machine. In further accordance with the second aspect, validating the request may comprise reviewing an access policy that is associated with the first machine to determine whether the access policy indicates that the first machine is not to receive access to the resource. In further accordance with the second aspect, providing the data may comprise providing the data from the client device to the first machine further based on the access policy not indicating that the first machine is not to receive access to the resource. In further accordance with the second aspect, the second example method may further comprise providing an inquiry via a user interface of the client device based on receipt of the request. The inquiry may solicit identification of at least one access policy to be applied with respect to the request. In further accordance with the second aspect, the second example method may further comprise receiving identification of the access policy that is associated with the first machine via the user interface in response to the inquiry. In further accordance with the second aspect, reviewing the access policy may comprise reviewing the access policy in response to receiving the identification of the access policy. The second aspect of the second example method may be implemented in combination with the first aspect of the second example method, though the example embodiments are not limited in this respect.

In a third aspect of the second example method, the second example method further comprises initiating performance of a management action with respect to the first machine by the client device. In accordance with the third aspect, receiving the request comprises receiving the request based on initiation of the performance of the management action. The third aspect of the second example method may be implemented in combination with the first and/or second aspect of the second example method, though the example embodiments are not limited in this respect.

In a fourth aspect of the second example method, the second example method comprises initiating a connection between the client device and the network. In accordance with the fourth aspect, initiation of the connection between the client device and the network triggers the request. The fourth aspect of the second example method may be implemented in combination with the first, second, and/or third aspect of the second example method, though the example embodiments are not limited in this respect.

In an example system, processing logic is configured to process a request for a resource to be accessed on behalf of a client device to determine whether the request is to be fulfilled. The request is received from a first machine (e.g., in a single sign-on environment). The client device may be communicatively coupled to the first machine via a network. The client device and the first machine may be same or different. Informing logic is configured to inform the client device of an identity of the resource in response to a determination that the request is to be fulfilled. Provision logic is configured to provide data of the resource, which is received from the client device in response to the client device receiving the data from a second machine that stores the resource, to fulfill the request.

In a first aspect of the example system, the data is received from the client device further in response to validation of the request. In accordance with the first aspect, the provision logic is configured to provide the data to fulfill the request based on the validation.

In a second aspect of the example system, the request further identifies the first machine. The second aspect of the example system may be implemented in combination with the first aspect of the example system, though the example embodiments are not limited in this respect.

In a third aspect of the example system, the example system further comprises determination logic configured to determine whether performance of a management action is initiated with respect to the first machine. In accordance with the third aspect, the request is based on initiation of the performance of the management action. In an example, the determination logic may be configured to determine that the performance of the management action is initiated in response to receipt of a performance request from the client device that specifies that the resource is to be accessed. In another example, a performance request that is received from the client device to initiate the management action may not specify that the resource is to be accessed. In accordance with this example, the processing logic may receive the request from the first machine in response to a determination by the first machine that the resource is to be accessed for the performance of the management action. The third aspect of the example system may be implemented in combination with the first and/or second aspect of the example system, though the example embodiments are not limited in this respect.

In a fourth aspect of the example system, the example system further comprises determination logic configured to determine whether a connection of the client device to the network is initiated. In accordance with the fourth aspect, the informing logic is configured to delay informing the client device of the identity of the resource until initiation of the connection of the client device to the network occurs. The fourth aspect of the example system may be implemented in combination with the first, second, and/or third aspect of the example system, though the example embodiments are not limited in this respect.

In a fifth aspect of the example system, the request is directed to a file system. In accordance with the fifth aspect, the example system further comprises a file system filter configured to intercept the request and to provide the data to fulfill the request. The fifth aspect of the example system may be implemented in combination with the first, second, third, and/or fourth aspect of the example system, though the example embodiments are not limited in this respect.

In a sixth aspect of the example system, the example system further comprises hook logic configured to intercept the request using an application programming interface hook. The sixth aspect of the example system may be implemented in combination with the first, second, third, fourth, and/or fifth aspect of the example system, though the example embodiments are not limited in this respect.

In a seventh aspect of the example system, the example system further comprises a virtual machine that is deployed on the first machine. In accordance with the seventh aspect, the virtual machine is configured to receive the request and to provide the data to the first machine to fulfill the request. The seventh aspect of the example system may be implemented in combination with the first, second, third, fourth, fifth, and/or sixth aspect of the example system, though the example embodiments are not limited in this respect.

In an eighth aspect of the example system, the request is directed to disk. In accordance with the eighth aspect, the example system further comprises a disk driver configured to intercept the request and to provide the data to the first machine to fulfill the request. The eighth aspect of the example system may be implemented in combination with the first, second, third, fourth, fifth, sixth, and/or seventh aspect of the example system, though the example embodiments are not limited in this respect.

In a ninth aspect of the example system, the request is directed to the network. In accordance with the ninth aspect, the example system further comprises a network driver configured to intercept the request and to provide the data to the first machine to fulfill the request. The ninth aspect of the example system may be implemented in combination with the first, second, third, fourth, fifth, sixth, seventh, and/or eighth aspect of the example system, though the example embodiments are not limited in this respect.

In a tenth aspect of the example system, the request is directed to the network. In accordance with the tenth aspect, the example system further comprises a firewall client configured to intercept the request and to provide the data to the first machine to fulfill the request. The tenth aspect of the example system may be implemented in combination with the first, second, third, fourth, fifth, sixth, seventh, eighth, and/or ninth aspect of the example system, though the example embodiments are not limited in this respect.

In an eleventh aspect of the example system, the example system further comprises a management application that is deployed on the first machine. In accordance with the eleventh aspect, the management application is configured to receive the request and to provide the data to the first machine to fulfill the request. The eleventh aspect of the example system may be implemented in combination with the first, second, third, fourth, fifth, sixth, seventh, eighth, ninth, and/or tenth aspect of the example system, though the example embodiments are not limited in this respect.

In a twelfth aspect of the example system, the management application is configured to receive the request in accordance with a command that is part of the management application. The twelfth aspect of the example system may be implemented in combination with the first, second, third, fourth, fifth, sixth, seventh, eighth, ninth, tenth, and/or eleventh aspect of the example system, though the example embodiments are not limited in this respect.

In a thirteenth aspect of the example system, the management application is configured to receive the request in accordance with a command that is part of an operating system of the first machine. The thirteenth aspect of the example system may be implemented in combination with the first, second, third, fourth, fifth, sixth, seventh, eighth, ninth, tenth, eleventh, and/or twelfth aspect of the example system, though the example embodiments are not limited in this respect.

In a fourteenth aspect of the example system, the example system further comprises a virtual drive that is mounted on the first machine. In accordance with the fourteenth aspect, the virtual drive is configured to receive the request and to provide the data to the first machine to fulfill the request. The fourteenth aspect of the example system may be implemented in combination with the first, second, third, fourth, fifth, sixth, seventh, eighth, ninth, tenth, eleventh, twelfth, and/or thirteenth aspect of the example system, though the example embodiments are not limited in this respect.

In a fifteenth aspect of the example system, the request is directed to a virtual file system. In accordance with the fifteenth aspect, the example system further comprises a tool, which is configured to interact with the virtual file system, is further configured to intercept the request and to provide the data to the first machine to fulfill the request. The fifteenth aspect of the example system may be implemented in combination with the first, second, third, fourth, fifth, sixth, seventh, eighth, ninth, tenth, eleventh, twelfth, thirteenth, and/or fourteenth aspect of the example system, though the example embodiments are not limited in this respect.

In an example client device, processing logic is configured to process a request (e.g., in a single sign-on environment). The request identifies a resource to be accessed on behalf of the client device by a first machine (e.g., that is communicatively coupled to the client device via a network). Query provision logic is configured to provide a query to a second machine that stores the resource. The query requests access to the resource. Data provision logic is configured to receive data of the resource from the second machine in response to the query. The data provision logic is further configured to provide the data to the first machine based on the request in response to receipt of the data.

In a first aspect of the example client device, the request further identifies the first machine.

In a second aspect of the example client device, the client device further comprises validation logic configured to validate the request. In accordance with the second aspect, the data provision logic is configured to provide the data to the first machine based on validation of the request in response to receipt of the data. In further accordance with the second aspect, the request may further identify the first machine. In further accordance with the second aspect, the validation logic may be configured to review an access policy that is associated with the first machine to determine whether the access policy indicates that the first machine is not to receive access to the resource. In further accordance with the second aspect, the data provision logic may be configured to provide the data to the first machine further based on the access policy not indicating that the first machine is not to receive access to the resource. In further accordance with the second aspect, the client device may further comprise a user interface. In further accordance with the second aspect, the query provision logic may be further configured to provide an inquiry via the user interface based on receipt of the request. The inquiry may be configured to solicit identification of at least one access policy to be applied with respect to the request. In further accordance with the second aspect, the validation logic may be configured to receive identification of the access policy that is associated with the first machine via the user interface in response to the inquiry. In further accordance with the second aspect, the validation logic may be configured to review the access policy in response to receipt of the identification of the access policy. The second aspect of the example client device may be implemented in combination with the first aspect of the example client device, though the example embodiments are not limited in this respect.

In a third aspect of the example client device, the client device further comprises management logic configured to initiate performance of a management action with respect to the first machine. In accordance with the third aspect, the request is based on initiation of the performance of the management action. The third aspect of the example client device may be implemented in combination with the first and/or second aspect of the example client device, though the example embodiments are not limited in this respect.

In a fourth aspect of the example client device, the client device further comprises initiation logic configured to initiate a connection between the client device and the network. In accordance with the fourth aspect, initiation of the connection between the client device and the network triggers the request. The fourth aspect of the example client device may be implemented in combination with the first, second, and/or third aspect of the example client device, though the example embodiments are not limited in this respect.

A first example computer program product includes a computer-readable medium having computer program logic recorded thereon for enabling a processor-based system to provide client-assisted fulfillment of a resource request. The computer program product includes a first program logic module, a second program logic module, and a third program logic module. The first program logic module is for enabling the processor-based system to process a request for a resource to be accessed on behalf of a client device to determine whether the request is to be fulfilled. The request is received from a first machine (e.g., in a single sign-on environment). The client device may be communicatively coupled to the first machine via a network. The client device and the first machine may be same or different. The second program logic module is for enabling the processor-based system to inform the client device of an identity of the resource in response to a determination that the request is to be fulfilled. The third program logic module is for enabling the processor-based system to provide data of the resource, which is received from the client device in response to the client device receiving the data from a second machine that stores the resource, to fulfill the request.

A second example computer program product includes a computer-readable medium having computer program logic recorded thereon for enabling a processor-based system to provide client-assisted fulfillment of a resource request. The computer program product includes a first program logic module, a second program logic module, and a third program logic module. The first program logic module is for enabling the processor-based system to process a request (e.g., in a single sign-on environment). The request identifies a resource to be accessed on behalf of the client device by a first machine (e.g., that is communicatively coupled to the client device via a network). The second program logic module is for enabling the processor-based system to provide a query to a second machine that stores the resource. The query requests access to the resource. The third program logic module is for enabling the processor-based system to receive data of the resource from the second machine in response to the query. The third program logic module is also for enabling the processor-based system to provide the data to the first machine based on the request in response to receipt of the data.

### IV. Example Computer System

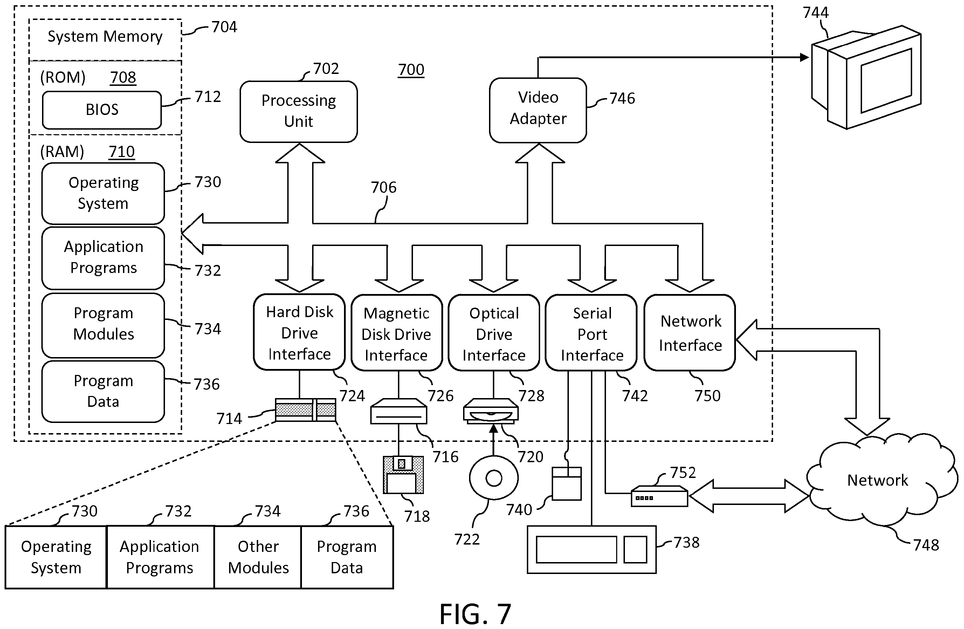

FIG. 7 depicts an example computer 700 in which embodiments may be implemented. Any one or more of client devices 102A-102M, any one or more of file machines 106A-106N, and/or resource access agent 108 shown in FIG. 1; client device 202, resource access agent 208, first machine 206A, and/or second machine 206B shown in FIG. 2; resource request director 400 shown in FIG. 4; and/or client device 600 shown in FIG. 6 may be implemented using computer 700, including one or more features of computer 700 and/or alternative features. Computer 700 may be a general-purpose computing device in the form of a conventional personal computer, a mobile computer, or a workstation, for example, or computer 700 may be a special purpose computing device. The description of computer 700 provided herein is provided for purposes of illustration, and is not intended to be limiting. Embodiments may be implemented in further types of computer systems, as would be known to persons skilled in the relevant art(s).

As shown in FIG. 7, computer 700 includes a processing unit 702, a system memory 704, and a bus 706 that couples various system components including system memory 704 to processing unit 702. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random access memory (RAM) 710. A basic input/output system 712 (BIOS) is stored in ROM 708.

Computer 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 730, one or more application programs 732, other program modules 734, and program data 736. Application programs 732 or program modules 734 may include, for example, computer program logic for implementing any one or more of resource access agent 108, resource access agent 208, receiving logic 402, processing logic 404, informing logic 406, provision logic 408, detection logic 410, file system filter 412, hook logic 414, virtual machine 416, disk driver 418, network driver 420, firewall client 422, management application 424, virtual drive 426, tool 428, fulfillment logic 634, management logic 602, receiving logic 604, processing logic 606, query provision logic 608, data provision logic 610, validation logic 612, user interface 614, initiation logic 616, flowchart 300 (including any step of flowchart 300), and/or flowchart 500 (including any step of flowchart 500), as described herein.

A user may enter commands and information into the computer 700 through input devices such as keyboard 738 and pointing device 740. Other input devices (not shown) may include a microphone, joystick, game pad, satellite dish, scanner, touch screen, camera, accelerometer, gyroscope, or the like. These and other input devices are often connected to the processing unit 702 through a serial port interface 742 that is coupled to bus 706, but may be connected by other interfaces, such as a parallel port, game port, or a universal serial bus (USB).

A display device 744 (e.g., a monitor) is also connected to bus 706 via an interface, such as a video adapter 746. In addition to display device 744, computer 700 may include other peripheral output devices (not shown) such as speakers and printers.

Computer 700 is connected to a network 748 (e.g., the Internet) through a network interface or adapter 750, a modem 752, or other means for establishing communications over the network. Modem 752, which may be internal or external, is connected to bus 706 via serial port interface 742.

As used herein, the terms "computer program medium" and "computer-readable storage medium" are used to generally refer to media such as the hard disk associated with hard disk drive 714, removable magnetic disk 718, removable optical disk 722, as well as other media such as flash memory cards, digital video disks, random access memories (RAMs), read only memories (ROM), and the like. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 732 and other program modules 734) may be stored on the hard disk, magnetic disk, optical disk, ROM, or RAM. Such computer programs may also be received via network interface 750 or serial port interface 742. Such computer programs, when executed or loaded by an application, enable computer 700 to implement features of embodiments discussed herein. Accordingly, such computer programs represent controllers of the computer 700.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### V. Conclusion

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A method of providing client-assisted fulfillment of a resource request, the method performed by a resource access agent deployed on a first machine using one or more processors of the first machine, the method comprising:
processing a request for a resource to be accessed on behalf of a client device, the request received from the first machine, wherein the request is initially directed to a second machine from the first machine, and wherein the resource access agent is configured to intercept the request and to redirect the request to the client device;
informing the client device of an identity of the resource using at least one of the one or more processors;
receiving data of the resource from the client device in response to the client device receiving the data from the second machine that stores the resource; and
providing the data, using at least one of the one or more processors, to fulfill the request in response to receiving the data from the client device.

2. The method of claim 1, wherein receiving the data comprises:
receiving the data from the client device further in response to validation of the request; and
wherein providing the data comprises:
providing the data to fulfill the request based on the validation.

3. The method of claim 1, wherein receiving the request comprises:
receiving the request that identifies the first machine.

4. The method of claim 1, further comprising:
determining that performance of a management action is initiated with respect to the first machine;
wherein receiving the request comprises:
receiving the request based on initiation of the performance of the management action.

5. The method of claim 1, further comprising:
determining that a connection of the client device to a network that communicatively couples the client device to the first machine is initiated;
wherein informing the client device of the identity of the resource comprises:
delaying the informing of the client device of the identity of the resource until initiation of the connection of the client device to the network.

6. The method of claim 1, wherein receiving the request comprises:
intercepting the request using an application programming interface hook.

7. A system to provide client-assisted fulfillment of a resource request, the system comprising:
one or more processors;
processing logic, implemented using at least one of the one or more processors, configured to process a request for a resource to be accessed on behalf of a client device to determine whether the request is to be fulfilled, the request received from a first machine, wherein the request is initially directed to a second machine from the first machine, and wherein the request is intercepted and redirected to the client device;
informing logic, implemented using at least one of the one or more processors, configured to inform the client device of an identity of the resource in response to a determination that the request is to be fulfilled; and
provision logic, implemented using at least one of the one or more processors, configured to provide data of the resource, which is received from the client device in response to the client device receiving the data from the second machine that stores the resource, to fulfill the request.

8. The system of claim 7, wherein the data is received from the client device further in response to validation of the request; and
wherein the provision logic is configured to provide the data to fulfill the request based on the validation.

9. The system of claim 7, wherein the request identifies the first machine.

10. The system of claim 7, further comprising:
determination logic configured to determine whether performance of a management action is initiated with respect to the first machine;
wherein the request is based on initiation of the performance of the management action.

11. The system of claim 7, further comprising:
determination logic configured to determine whether a connection of the client device to a network that is configured to communicatively couple the client device to the first machine is initiated;
wherein the informing logic is configured to delay informing the client device of the identity of the resource until initiation of the connection of the client device to the network occurs.

12. The system of claim 7, wherein the request is directed to a file system;
wherein the system further comprises:
a file system filter configured to intercept the request and to provide the data to fulfill the request.

13. The system of claim 7, further comprising:
a virtual machine that is deployed on the first machine;
wherein the virtual machine is configured to receive the request and to provide the data to the first machine to fulfill the request.

14. A computer program product comprising a computer-readable storage medium having computer program logic recorded thereonwhich, when executed by a processor-based system, causes the processor-based system to provide client-assisted fulfillment of a resource request, the computer program logic comprising:
a first program logic module causing the processor-based system to process a request for a resource to be accessed on behalf of a client device to determine whether the request is to be fulfilled, the request received from a first machine, wherein the request is initially directed to a second machine from the first machine, and wherein the request is intercepted and redirected to the client device;
a second program logic module causing the processor-based system to inform the client device of an identity of the resource in response to a determination that the request is to be fulfilled; and
a third program logic module causing the processor-based system to provide data of the resource, which is received from the client device in response to the client device receiving the data from the second machine that stores the resource, to fulfill the request.

15. The computer program product of claim 14, wherein the data is received from the client device further in response to validation of the request; and
wherein the third program logic module comprises:
logic causing the processor-based system to provide the data to fulfill the request based on the validation.

## Patentansprüche

1. Verfahren zur Bereitstellung einer Client-unterstützten Erfüllung einer Ressourcenanfrage, wobei das Verfahren von einem Ressourcenzugriffsagenten ausgeführt wird, der in einer ersten Maschine eingerichtet ist, wobei ein oder mehrere Prozessoren der ersten Maschine verwendet werden, wobei das Verfahren umfasst:
Verarbeiten einer Anfrage nach einer Ressource, auf die zuzugreifen ist, anstelle einer Client-Einrichtung, wobei die Anfrage aus der ersten Maschine empfangen wird, und wobei die Anfrage anfänglich von der ersten Maschine zu einer zweiten Maschine gerichtet wird, und wobei der Ressourcenzugriffsagent ausgebildet ist, die Anfrage abzufangen und die Anfrage zu der Client-Einrichtung umzuleiten;
Informieren der Client-Einrichtung über eine Identität der Ressource unter Anwendung mindestens eines des einen oder der mehreren Prozessoren;
Empfangen von Daten der Ressource aus der Client-Einrichtung in Reaktion darauf, dass die Client-Einrichtung die Daten aus der zweiten Maschine, die die Ressource speichert, empfängt; und
Bereitstellen der Daten unter Anwendung mindestens eines des einen oder der mehreren Prozessoren in Reaktion auf den Empfang der Daten aus der Client-Einrichtung, um die Anfrage zu erfüllen.

2. Verfahren nach Anspruch 1, wobei Empfangen der Daten umfasst:
Empfangen der Daten aus der Client-Einrichtung in Reaktion auf eine Validierung der Anfrage; und
wobei Bereitstellen der Daten umfasst:
Bereitstellen der Daten zur Erfüllung der Anfrage auf der Grundlage der Validierung.

3. Verfahren nach Anspruch 1, wobei Empfangen der Anfrage umfasst:
Empfangen der Anfrage, die die erste Maschine bezeichnet.

4. Verfahren nach Anspruch 1, das ferner umfasst:
Bestimmen, dass die Ausführung einer Verwaltungsaktion in Bezug auf die erste Maschine initiiert wird;
wobei Empfangen der Anfrage umfasst:
Empfangen der Anfrage auf der Grundlage der Initiierung der Ausführung der Verwaltungsaktion.

5. Verfahren nach Anspruch 1, das ferner umfasst:
Bestimmen, dass eine Verbindung der Client-Einrichtung zu einem Netzwerk, das die Client-Einrichtung kommunizierend mit der ersten Maschine verbindet, initiiert wird;
wobei Informieren der Client-Einrichtung über die Identität der Ressource umfasst:
Verzögern des Informierens der Client-Einrichtung über die Identität der Ressource, bis die Verbindung der Client-Einrichtung zu dem Netzwerk initiiert ist.

6. Verfahren nach Anspruch 1, wobei Empfangen der Anfrage umfasst:
Abfangen der Anfrage unter Anwendung einer Anwendungsprogrammierschnittstellen-Abfangeinheit.

7. System zur Bereitstellung einer Client-unterstützten Erfüllung einer Ressourcenanfrage, wobei das System umfasst:
einen oder mehrere Prozessoren;
eine Verarbeitungslogik, die unter Anwendung mindestens eines des einen oder der mehreren Prozessoren eingerichtet und ausgebildet ist, eine Anfrage nach einer Ressource, auf die zuzugreifen ist, anstelle einer Client-Einrichtung zu verarbeiten, um zu ermitteln, ob die Anfrage zu erfüllen ist, wobei die Anfrage aus einer ersten Maschine empfangen wird, wobei die Anfrage anfänglich von der ersten Maschine an eine zweite Maschine gerichtet ist, und wobei die Anfrage abgefangen und zu der Client-Einrichtung umgeleitet wird;
eine Benachrichtigungslogik, die unter Anwendung mindestens eines des einen oder der mehreren Prozessoren eingerichtet und ausgebildet ist, die Client-Einrichtung über eine Identität der Ressource in Reaktion darauf informiert, dass ermittelt wird, dass die Anfrage zu erfüllen ist; und
eine Bereitstellungslogik, die unter Anwendung mindestens eines des einen oder der mehreren Prozessoren eingerichtet und ausgebildet ist, zur Erfüllung der Anfrage Daten der Ressource bereitzustellen, die aus der Client-Einrichtung in Reaktion darauf empfangen werden, dass die Client-Einrichtung die Daten aus der zweiten Maschine, die die Ressource speichert, empfängt.

8. System nach Anspruch 7, wobei die Daten aus der Client-Einrichtung ferner in Reaktion auf eine Validierung der Anfrage empfangen werden; und
wobei die Bereitstellungslogik ausgebildet ist, die Daten zur Erfüllung der Anfrage auf der Grundlage der Validierung bereitzustellen.

9. System nach Anspruch 7, wobei die Anfrage die erste Maschine bezeichnet.

10. System nach Anspruch 7, das ferner umfasst:
eine Ermittlungslogik, die ausgebildet ist zu ermitteln, ob die Ausführung einer Verwaltungsaktion in Bezug auf die erste Maschine initiiert ist;
wobei die Anfrage auf einer Initiierung der Ausführung der Verwaltungsaktion beruht.

11. System nach Anspruch 7, das ferner umfasst:
eine Ermittlungslogik, die ausgebildet ist zu ermitteln, ob eine Verbindung der Client-Einrichtung zu einem Netzwerk, das zur kommunizierenden Verbindung der Client-Einrichtung mit der ersten Maschine ausgebildet ist, initiiert ist;
wobei die Benachrichtigungslogik ausgebildet ist, das Informieren der Client-Einrichtung über die Identität der Ressource bis zum Stattfinden der Initiierung der Verbindung der Client-Einrichtung zu dem Netzwerk zu verzögern.

12. System nach Anspruch 7, wobei die Anfrage an ein Dateisystem gerichtet ist;
wobei das System ferner umfasst:
einen Dateisystemfilter, der ausgebildet ist, die Anfrage abzufangen und die Daten zur Erfüllung der Anfrage bereitzustellen.

13. System nach Anspruch 7, das ferner umfasst:
eine virtuelle Maschine, die in der ersten Maschine eingerichtet ist;
wobei die virtuelle Maschine ausgebildet ist, die Anfrage zu empfangen und die Daten zur Erfüllung der Anfrage für die erste Maschine bereitzustellen.

14. Computerprogrammprodukt mit einem computerlesbaren Speichermedium, auf welchem eine Computerprogrammlogik aufgezeichnet ist, die bei Ausführung durch ein prozessorgestütztes System bewirkt, dass das prozessorgestützte System eine Client-unterstützte Erfüllung einer Ressourcenanfrage bereitstellt, wobei die Computerprogrammlogik aufweist:
ein erstes Programmlogikmodul, das bewirkt, dass das prozessorgestützte System eine Anfrage bezüglich einer Ressource, auf die zuzugreifen ist, anstelle einer Client-Einrichtung verarbeitet, um zu ermitteln, ob die Anfrage zu erfüllen ist, wobei die Anfrage aus einer ersten Maschine empfangen wird, wobei die Anfrage zunächst von der ersten Maschine an eine zweite Maschine gerichtet ist, und wobei die Anfrage abgefangen und zu der Client-Einrichtung umgeleitet wird;
ein zweites Programmlogikmodul, das bewirkt, dass das prozessorgestützte System die Client-Einrichtung über eine Identität der Ressource in Reaktion auf eine Ermittlung, dass die Anfrage zu erfüllen ist, informiert; und
ein drittes Programmlogikmodul, das bewirkt, dass das prozessorgestützte System zur Erfüllung der Anfrage Daten der Ressource bereitstellt, die aus der Client-Einrichtung in Reaktion darauf empfangen werden, dass die Client-Einrichtung die Daten aus der die Ressource speichernden zweiten Maschine empfängt.

15. Computerprogrammprodukt nach Anspruch 14, wobei die Daten aus der Client-Einrichtung ferner in Reaktion auf eine Validierung der Anfrage empfangen werden; und
wobei das dritte Programmlogikmodul umfasst:
eine Logik, die bewirkt, dass das prozessorgestützte System die Daten zur Erfüllung der Anfrage auf der Grundlage der Validierung bereitstellt.

## Revendications

1. Procédé pour fournir une satisfaction assistée par un client d'une demande de ressources, le procédé réalisé par un agent d'accès à des ressources déployé sur une première machine utilisant un ou plusieurs processeurs de la première machine, le procédé comprenant :
traitement d'une demande d'une ressource à laquelle accéder pour le compte d'un dispositif client, la demande reçue de la première machine, dans lequel la demande est initialement dirigée vers une deuxième machine depuis la première machine, et dans lequel l'agent d'accès à des ressources est configuré pour intercepter la demande et pour rediriger la demande vers le dispositif client ;
information du dispositif client d'une identité de la ressource utilisant au moins un de l'un ou plusieurs processeurs ;
réception de données de la ressource de la part du dispositif client en réaction au dispositif client recevant les données de la deuxième machine qui stocke la ressource ; et
mise à disposition des données, en utilisant au moins un de l'un ou plusieurs processeurs, pour satisfaire la demande en réaction à une réception des données de la part du dispositif client.

2. Le procédé de la revendication 1, dans lequel la réception des données comprend :
réception des données de la part du dispositif client en outre en réaction à une validation de la demande ; et
dans lequel une mise à disposition des données comprend :
mise à disposition des données pour satisfaire la demande selon la validation.

3. Le procédé de la revendication 1, dans lequel la réception de la demande comprend :
réception de la demande qui identifie la première machine.

4. Le procédé de la revendication 1, comprenant en outre :
détermination que l'exécution d'une action de gestion est lancée en fonction de la première machine ;
dans lequel une réception de la demande comprend :
réception de la demande selon un lancement de l'exécution de l'action de gestion.

5. Le procédé de la revendication 1, comprenant en outre :
détermination qu'une connexion du dispositif client à un réseau qui couple par voie de communication le dispositif client à la première machine est établie ;
dans lequel une information du dispositif client de l'identité de la ressource comprend :
temporisation de l'information du dispositif client de l'identité de la ressource jusqu'à un établissement de la connexion du dispositif client au réseau.

6. Le procédé de la revendication 1, dans lequel la réception de la demande comprend :
interception de la demande en utilisant un crochet (hook) d'interface de programmation d'application.

7. Système pour fournir une satisfaction assistée par un client d'une demande de ressources, le système comprenant :
un ou plusieurs processeurs ;
une logique de traitement, mise en oeuvre en utilisant au moins un de l'un ou plusieurs processeurs, configurée pour traiter une demande d'une ressource à laquelle accéder pour le compte d'un dispositif client pour déterminer si la demande est à satisfaire, la demande reçue d'une première machine, dans lequel la demande est initialement dirigée vers une deuxième machine depuis la première machine, et dans lequel la demande est interceptée et redirigée vers le dispositif client ;
une logique d'information, mise en oeuvre en utilisant au moins un de l'un ou plusieurs processeurs, configurée pour informer le dispositif client d'une identité de la ressource en réaction à une détermination que la demande est à satisfaire ; et
une logique de mise à disposition, mise en oeuvre en utilisant au moins un de l'un ou plusieurs processeurs, configurée pour fournir des données de la ressource, qui sont reçues du dispositif client en réaction au dispositif client recevant les données de la part de la deuxième machine qui stocke la ressource, pour satisfaire la demande.

8. Le système de la revendication 7, dans lequel les données sont reçues du dispositif client en outre en réaction à une validation de la demande ; et
dans lequel la logique de mise à disposition est configurée pour fournir les données pour satisfaire la demande selon la validation.

9. Le système de la revendication 7, dans lequel la demande identifie la première machine.

10. Le système de la revendication 7, comprenant en outre :
une logique de détermination configurée pour déterminer si l'exécution d'une action de gestion est lancée ou non en fonction de la première machine ;
dans lequel la demande repose sur un lancement de l'exécution de l'action de gestion.

11. Le système de la revendication 7, comprenant en outre :
une logique de détermination configurée pour déterminer si une connexion du dispositif client à un réseau qui est configuré pour coupler par voie de communication le dispositif client à la première machine est ou non établie ;
dans lequel la logique d'information est configurée pour temporiser une information du dispositif client de l'identité de la ressource jusqu'à ce que la connexion du dispositif client au réseau s'établisse.

12. Le système de la revendication 7, dans lequel la demande est dirigée vers un système de fichiers ;
dans lequel le système comprend en outre :
un filtre de système de fichiers configuré pour intercepter la demande et pour fournir les données pour satisfaire la demande.

13. Le système de la revendication 7, comprenant en outre :
une machine virtuelle qui est déployée sur la première machine ;
dans lequel la machine virtuelle est configurée pour recevoir la demande et pour fournir les données à la première machine pour satisfaire la demande.

14. Produit de programme informatique comprenant un support de stockage lisible par un ordinateur disposant d'une logique de programme informatique enregistrée sur celui-ci exécutée par un système fondé sur un processeur, fait fournir par le système fondé sur un processeur une satisfaction assistée par un client d'une demande de ressources, la logique de programme informatique comprenant :
un premier module logique de programme faisant traiter par le système fondé sur un processeur une demande d'une ressource à laquelle accéder pour le compte d'un dispositif client pour déterminer si la demande est ou non à satisfaire, la demande reçue d'une première machine, dans lequel la demande est initialement dirigée vers une deuxième machine depuis la première machine, et dans lequel la demande est interceptée et redirigée vers le dispositif client ;
un deuxième module logique de programme faisant informer par le système fondé sur un processeur le dispositif client d'une identité de la ressource en réaction à une détermination que la demande est à satisfaire ; et
un troisième module logique de programme faisant fournir par le système fondé sur un processeur des données de la ressource, qui sont reçues du dispositif client en réaction au dispositif client recevant les données de la part de la deuxième machine qui stocke la ressource, pour satisfaire la demande.

15. Le produit de programme informatique de la revendication 14, dans lequel les données sont reçues du dispositif client en outre en réaction à une validation de la demande ; et
dans lequel le troisième module logique de programme comprend :
une logique faisant fournir par le système fondé sur un processeur les données pour satisfaire la demande selon la validation.
